# EUROPÄISCHE PATENTANMELDUNG

(11) **EP 0 884 662 A2**
(43) Veröffentlichungstag der Anmeldung: **16.12.1998**
(21) Anmeldenummer: 98110516.6
(22) Anmeldetag: 09.06.1998
(51) Int. Cl.: G04B 47/00, G04B 37/22

(54) **Kleinuhr mit Transponder**

(30) Priorität: 13.06.1997 DE 19724707
(71) Anmelder: Junghans Uhren GmbH, 78713 Schramberg (DE)
(72) Erfinder: Lechner, Thomas, Dr.-Ing., 78144 Tennenbronn (DE); Schaffer, Holger, Dipl.-Ing., 77761 Schiltach (DE)
(74) Vertreter: Hofmann, Gerhard, Dipl.-Ing. Patentassessor

(57) **Zusammenfassung**

Bei einer Kleinuhr (11) mit in ihr Gehäuse (19) integriertem Transponder (13) bewirkt eine elektromagnetische Abschirmung (Einlagekörper 18) in einer Ebene zwischen der Transponder-Antennenspule (14) und den metallischen Komponenten des elektromotorisch betriebenen Werkes (17) eine Verbesserung der Spulengüte und eine Umlenkung der ansonsten von elektrisch leitfähigen Konstruktionsteilen des Werkes (17) verdrängten externen elektromagnetischen Feldlinien in das Zentrum der Ringspule (14) hinein, also eine Verbesserung der induktiven Kopplung zwischen den Antennenspulen des Abfragegerätes und des Transponders (13). Das ermöglicht es insbesondere, Transponder-Antennenspulen (14) einzusetzen, die nicht mehr außerhalb der Projektion des Uhrwerks (17) liegen müssen, so daß die Gehäuseabmessungen im wesentlichen wieder allein von den Werkabmessungen bestimmt werden, ohne dadurch eine wesentliche Einschränkung der Abfrage-Reichweite hinnehmen zu müssen; und das eröffnet insbesondere die Möglichkeit, das Zifferblatt (12) selbst als den Transponder (13) auszustatten. Der höher auftragende Vergußbereich des Transponder-Chips (15) greift zweckmäßigerweise in eine Aussparung (16) ein, die in den Einlagekörper (18) freigespart oder eingearbeitet ist. Da der platten- oder folienförmige Einlagekörper (18) selbst nicht dicker sein muß, als der Schaltungsverguß des Transponders (13) aufträgt, ist insofern überhaupt keine Verdickung des Uhrenaufbaus gegeben.

## Beschreibung

Die Erfindung betrifft eine Kleinuhr, insbesondere eine Armbanduhr, gemäß dem Oberbegriff des Anspruches 1.

Eine solche Transponder-Kleinuhr war als 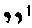 Skidata-Keywatch" (vgl. DIALOG Heft 2/1991 Seite 33) und ist als 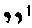 Swatch Access" auf dem Markt. Sie dient z.B. als Berechtigungsausweis und Fernsteuermittel etwa zum Öffnen von Türen bzw. als elektronisches Abbuchungskonto für Abrechnungssysteme wie etwa zur Benutzung von Skiliften, Parkgaragen und ähnlichem. Der Transponder besteht im wesentlichen aus einer flachen und schmalen kernlosen Ringspule, an deren Spulenenden ein Transponder-Schaltkreis mit Speicher und Modulator - sowie gegebenenfalls ein diskreter Abstimmkondensator, wenn nicht über die parasitären Schaltungskapazitäten bereits eine Frequenzabstimmung erfolgt - angeschlossen ist. Die Spule dient als magnetische Antenne für ein Abfragefeld, das von einem Sender im induktiv an den Transponder gekoppelten Abfragegerät mit einer Frequenz generiert wird, die bei eingeführten Transpondersystemen typischerweise im Übergangsbereich zwischen den Mittelwellen- und dem Langwellen-Rundfunkfrequenzbereichen bei 125 kHz liegt, wenn es sich nicht um eine Kurzwellenverbindung bei 13,56 MHz handelt.

Wie in der EP 0 582 137 A2 oder in der EP 0 258 415 B als solches für die Funktion eines passiven Transponders näher beschrieben, nimmt die auf das Hochfrequenz-Abfragefeld abgestimmte Antennenspule des Transponders bei hinreichender induktiver Kopplung mit der Antennenspule des Abfragegerätes, also insbesondere bei hinreichender gegenseitiger Annäherung zwischen Transponder und Abfragegerät, genügend Hochfrequenzenergie auf um die für das Auslesen (und ggf. auch für ein Beschreiben) des Transponder-Schaltkreises die erforderliche Betriebsspannung zur Verfügung zu stellen. Die, mit der so im Transponder selbst gewonnenen Energie, aus dem Speicherchip ausgelesene Binärinformation steuert den Transponder-Modulator, der die Transponder-Antenne im Rhythmus dieser Information bedämpft und somit dem im Abfragegerät generierten Hochfrequenzfeld in diesem Rhythmus Energie entzieht. Das ist im Abfragegerät als Amplitudenmodulation detektierbar. So wird beim passiven Transponder die aus dessem Speicher abgerufene Information drahtlos übermittelt, ohne die Energiequelle für den Betrieb der Kleinuhr selbst dafür belasten zu müssen, was sonst zu einer nicht tolerierbaren Verkürzung der Batterie-Lebensdauer führen könnte.

Für die Ausstattung einer Armbanduhr mit einem aktiven, aus der Energiequelle für das Uhrwerk gespeisten, Transponder ist es aus der CH 686 107 GA3 bekannt, die Rückseite einer unter dem Zifferblatt gelegenen Trägerplatte für das Uhrwerk in der Projektion außerhalb der Uhrwerksperipherie mit einer U-förmig im Bogen verlaufenden einlagigen Leiterbahnenschleife zu kaschieren. Die dient als Sendeantenne des Transponders, dessen aktive Senderschaltung unter der von der Trägerplatte aufgenommenen Leiterbahn ihrerseits befestigt ist.

Die Antennenschleife verläuft also außerhalb des Uhrwerksdurchmessers. Generell ist anzustreben, daß die Antennenspule eines scheibenförmigen Uhren-Transponders, der parallel zur Querschnittsebene des Werkes etwa konzentrisch zu diesem angeordnet ist, nicht nur nicht die Kontur des Werkes überlappt, sondern sogar einen möglichst weiten radialen Abstand um das Werk herum einhält. Denn das Räderwerk - zumal ein höherwertiges Räderwerk - beinhaltet zahlreiche metallische Teile wie Werkplatten, Räderbrücken und insbesondere den Stator wenigstens eines Schrittmotors. Solche im Werk vorhandenen leitfähigen Komponenten beeinflussen die Impedanz der Transponder-Antennenspule dahingehend, daß die Güte und die Induktivität der Antennen-Spule verringert wird. Außerdem verdrängen solche elektrisch leitenden Konstruktionsteile die externen hochfrequenten magnetischen Feldkomponenten, die von der Antenne des Abfragegerätes abgestrahlt werden, aus dem Werk hinaus und somit auch von der dicht benachbarten Transponder-Spulenfläche fort, die sich parallel zum Werkdurchmesser und axial neben dem Werk erstreckt. Da die Stärke der induktiven Verkopplung der Antennenspulen (des Abfragegerätes und des Transponders) über das Hochfrequenz-Abfragefeld den maximal möglichen Abstand beim Abruf von Daten aus dem Transponder bestimmt, muß für eine möglichst große Übertragungsreichweite die Transponder-Antennenspule möglichst weit außerhalb des Werkes angeordnet sein. Das bedingt ein möglichst kleines und dementsprechend teures Werk für gängige Größen von Armbanduhrengehäusen. Andererseits besitzen insbesondere Werke mit mechanischer Datumsanzeige auf einem umlaufenden Ring bereits einen besonders großen Durchmesser, was deren Einsatzmöglichkeit bei der Gestaltung gefälliger (kleiner) Uhrengehäuse entscheidend einschränkt, wenn nun innerhalb des Gehäuses auch noch die Transponder-Antennenringspule in radialem Abstand um das Uhrwerk herum unterzubringen ist.

In Erkenntnis dieser Gegebenheiten liegt vorliegender Erfindung die Aufgabe zugrunde, Maßnahmen anzubieten, die es ermöglichen, das Kleinuhren-Gehäuse trotz Transponder-Bestückung nicht, jedenfalls nicht wesentlich, größer als den Durchmesser des darin eingesetzten elektromechanischen Uhrwerkes auszulegen.

Diese Aufgabe ist erfindungsgemäß dadurch gelöst, daß die wesentlichen Teilmerkmale in Kombination gemäß dem Patentanspruch 1 realisiert werden. Nach jener Lösung wird z.B. in einer zum Werkquerschnitt parallelen Ebene zwischen Werk und Transponder ein Einlagekörper aus einem Material hoher Permeabilität eingelegt. Der erstreckt sich dann nicht nur über den Flächenbereich der Ringzone der Antennenspule, sondern auch noch scheibenförmig radial bis ins Ringzentrum hinein. Das permeable Material lenkt dadurch die magnetischen Feldlinien des umgebenden Abfragefeldes, die normalerweise aufgrund der Metallteile im Werk außen herum und somit auch um die Antennenspule herum verlaufen würden, nun zum Zentrum der Antennenspule um, was (infolge Vergrößerung des magnetischen Flusses durch den Spulenquerschnitt) zu einer Verbesserung des induktiven Kopplungsfaktors zwischen den zueinander distanzierten Antennenspulen des Abfragegerätes und des Transponders führt.

Zweckmäßigerweise wird für den hochpermeablen Einlagekörper ein Material von - wenigstens im Frequenzbereich des Abfrage-Koppelfeldes - möglichst geringer elektrischer Leitfähigkeit gewählt, wodurch die ringförmige Transponder-Antennenspule gegenüber den leitfähigen Teilen des Uhrwerks zusätzlich eine gewisse elektrische Abschirmung erfährt, was die resultierende elektrische Spulengüte verbessert.

So kann die vielwindrige ringförmige Abtennenspule, sei sie als Luftspule oder als gedruckte Schaltung ausgelegt, nun in der Projektion auch das Werk überlappen, braucht mit ihrem Innendurchmesser also keinen größeren Durchmesser als den Werkdurchmesser mehr aufzuweisen. Das bedeutet, daß jetzt innerhalb des Kleinuhrengehäuses der vollständige Spulendurchmesser auch als Werkdurchmesser zur Verfügung steht; bzw daß der Außendurchmesser der Transponder-Antennenspule auf einen etwa vorgegebenen Werkdurchmesser zurückgenommen werden kann. Auch kann ein vorhandener Transponder mit gegebenem Antennendurchmesser nun wahlfrei mit einem größeren oder mit einem kleineren Werk in einem Gehäuse zusammengeführt werden.

Unabhängig davon, ob das Werk im konkreten Bestückungsfall einen größeren oder einen kleineren Durchmesser als die Antennenspule aufweist, genügt es, den Einlagekörper ohne Rücksichtnahme auf den Werkdurchmesser entsprechend der Außenkontur der Antennenspule zu beranden, bei kreisringförmiger Antennenspule also für den Einlagekörper den gleichen Durchmesser zu wählen, wie für den Außendurchmesser der Ringspule.

Durch den über oder unter dem Werk, zwischen diesem und dem Scheibentransponder, eingefügten Einlagekörper braucht die Uhr keine spürbar größere Bauhöhe als ohne Einlagekörper aufzuweisen, weil schon eine dünne Scheibe oder Folie in einer Dickenabmessung von der Größenordnung des Vergußhügels über dem Transponder-Schaltkreis für die elektromagnetische Abschirm- und Leitwirkung genügt - mit achsparallelem Hineinreichen des Vergußhügels in eine Aussparung im Einlagekörper. Zur Vereinfachung der Montage auf dem Werk oder auf dem Scheiben-Transponder kann eine Fläche dieses dünnen, folien- oder plattenförmgen Einlagekörpers herstellungsseitig bereits mit einer selbstklebenden Adhäsionsschicht ausgestattet sein.

Durch die erfindungsgemäße Maßnahme können nun beliebig vorhandene Werke mit beliebig vorhandenen Transpondern kombiniert werden, weil nicht mehr darauf geachtet werden muß, daß der Werkaußendurchmesser kleiner ist als der Innendurchmesser der Transponder-Ringspule. Insbesondere sind nun auch höherwertige Werke einsetzbar, die sich durch größeren Metallanteil und / oder durch eine umlaufende metallische Datumsscheibe auszeichnen, ohne den Durchmesser des Kleinuhrengehäuses darüber hinaus noch für eine radial das Werk ringförmig umgebende Antennenspule vergrößern zu müssen.

So kann insbesondere auch der Transponder unmittelbar unter das Zifferblatt montiert oder sogar in das Zifferblatt der Uhr integriert werden, das - nun unter erfindungsgemäßer Zwischenlage des hochpermeablen aber elektrisch schlecht leitenden Körpers - wie üblich dicht über dein Uhrwerk gelegen ist - wie in unserer heutigen Parallelanmeldung unter gleicher Bezeichnung näher beschrieben, worauf hier zur weiteren Offenbarung voll-inhaltlich Bezug genommen wird. Unter dem Transponder-Zifferblatt ist also auch im Rahmen vorliegender Erfindung eine unmittelbare, integrale Ausstattung des Uhren-Zifferblattes selbst mit dem vollständigen passiven Transponder aus flacher Ringspule, Schaltungs-Chip und erforderlichenfalls diskretem Resonanzkondensator zu verstehen. Dabei kann dieser Transponder separat gefertigt und unter ein herkömmliches nichtmetallisches Zifferblatt geklebt sein. Es kann aber auch ein umspritzter oder ein Laminat-Aufbau vorgesehen sein, bei dem der Transponder zwischen einer sichtseitig die Minuterie aufweisenden Dekorschicht und einer Zifferblatt-Grundplatte eingeschlossen (eingeklebt oder eingeformt) ist. Vorzugsweise wird Polykarbonat als Trägermaterial eingesetzt, weil das sich bereits bei der Herstellung von kontaktlosen Chipkarten bewährt hat. Es kann im Rahmen vorliegender Erfindung aber auch vorgesehen sein, die Antennenspule als gedruckte Schaltung auf einer als Zifferblatt-Dekorträger dienenden Schaltungsplatine auszubilden. Insbesondere kann bei einer auf die Zifferblatt-Grundplatte gedruckten Spule im Interesse möglichst großer Antennen-Reichweite eine Entkopplung der Spulen-Windungen gegeneinander in dem Sinne erfolgen, daß aufeinanderfolgende Windungs-Leiterbahnen auf jeweils einander gegenüberliegenden Seiten der Trägerplatte verlaufen; wie in der eigenen EP 0 769 759 A2 näher beschrieben, worauf hier voll-inhaltlich Bezug genommen wird. Wenn wenigstens ein Teil der aufkaschierten spiralförmigen Leiterbahnenführung ganz oder teilweise auf der Sicht- oder Glasseite des Zifferblattes verläuft, erhält sie zweckmäßigerweise noch als mechanischen Schutz und optische Kaschierung eine Dekor-Deckschicht, die dann ihrerseits erst die Minuterie-Symbole trägt.

Der hochpermeable Einlagekörper ist auch vorteilhaft wirksam als Abschirmung der Spule gegen die benachbarten Gehäuseflächen (Wand bzw. Boden) eines metallischen (Armband-)Uhrengehäuse. Die Erfindung ist selbst dann vorteilhaft einsetzbar, wenn ein Transponderuhren-Aufbau vorliegt, bei dem eine ringförmige oder hohlzylindrische Antennenspule die Seitenwand des Uhrwerks umgibt. Dann wird der elektrisch schlecht aber magnetisch gut leitfähige Körper als Ring oder Hohlzylinder zwischen Werk und Spule angeordnet. Dieser Einlagekörper kann aber auch eine Topfform aufweisen, in die das Werk eingesenkt ist und die außen mit der Antennenspule bewickelt ist.

Auf jeden Fall bringt die erfindungsgemäße Maßnahme weitestgehend unabhängig von der konkreten Transponder-Uhrwerks-Kombination eine spürbare Vergrößerung der Reichweite für die Transponder-Abfrage, nämlich auf wenigstens das Doppelte gegenüber dem herkömmlichen Aufbau einer Transponder-Kleinuhr - selbst mit herkömmlicherweise außerhalb der Werkprojektion und axial gegenüber dem Werk versetzt gelegener Transponder-Antennenspule.

Vorzugsweise wird für das Material des Einlagekörpers ein handelsüblicher Ferrit-Polymer-Verbundwerkstoff gewählt, der sich außer durch hohe Permeabilität zugleich auch durch hohen elektrischen Widerstand über einen weiten Frequenzbereich auszeichnet, insbesondere im oben dargelegten Frequenzbereich üblicher induktiver Transponder-Kopplungen. Das Kompositmaterial zeigt elektrisch und mechanisch hohe Belastbarkeit und kann sowohl in dünner Plattenform wie auch in Folienform hergestellt werden. Da er spritzgußfähig ist, kann man die Geometrie des Körpers ohne kostspielige mechanische Nachbearbeitungen leicht der Kontur einer vorgegebenen Antennenspule anpassen. Ein solcher Komposit-Werkstoff weist auch gegenüber herkömmlichen Ferritkeramiken insbesondere den Vorteil auf, in seinen elektrischen und magnetischen Eigenschaften weniger von mechanischen Einflüssen abhängig zu sein. Das ermöglicht den Einsatz dünner Formkörper in rauher Umgebung wie im Falle des Einsatzes in einer Armbanduhr. Ursache dieser im Rahmen vorliegender Erfindung besonders vorteilhaften Eigenschaften ist die Kombination aus ferritkeramischen Partikeln, die für die magnetische Charakteristik maßgeblich sind, in einer polymeren Trägerstruktur, die für die mechanischen Eigenschaften bestimmend ist. Insbesondere sind die elektrischen Eigenschaften über den Ferritanteil in der Trägerstruktur in weiten Grenzen einstellbar. Trotz dieser Komposit-Struktur weist das Einlagekörper-Material praktisch homogene Materialeigenschaften auf weil die elektrische Wellenlänge des Koppelfeldes sehr viel größer ist als die typische mechanische Abmessung des Einlagekörpers in einer Armbanduhr.

Zusätzliche Alternativen und Weiterbildungen sowie weitere Merkmale und Vorteile der Erfindung ergeben sich aus den weiteren Ansprüchen und aus nachstehender Beschreibung von in der Zeichnung unter Beschränkung auf das Wesentliche stark abstrahiert und nicht ganz maßstabsgerecht skizzierten bevorzugten Realisierungsbeispielen zur erfindungsgemäßen Lösung. In der Zeichnung zeigt :
Fig.1 im abgebrochenen Längsschnitt durch das Gehäuse einer Transponderarmbanduhr den Einlagekörper zwischen dem Boden des Uhrwerks und der darunter angeordneten Transponder-Antennenspule und
Fig.2 in Längsschnitt-Prinzipdarstellung eine konzentrische Anordnung von Werk, Einlagekörper und Antennenspule ohne Berücksichtigung des Uhrengehäuses.

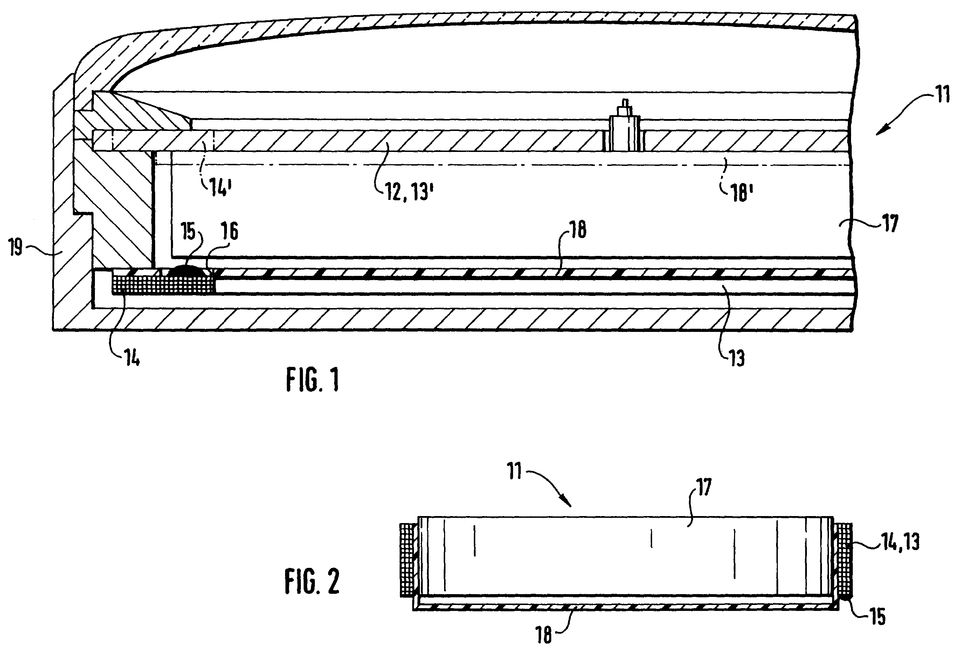

Beim in Fig.1 dargestellten Ausführungsbeispiel für die Kleinuhr 11 ist hinter dem Zifferblatt 12 ein passiver Transponder 13 aus Antennenspule 14 und direkt an ihre Drahtenden angeschlossenem Schaltkreis 15 oben erläuterter Art angeordnet, allerdings hier nicht unmittelbar hinter dem Zifferblatt 12 sondern erst hinter dem Uhrwerk 17 am Gehäuseboden. Zwischen dem Werk 17 und dem Transponder 13 ist ein dünner Einlagekörper 18 aus einem Material mit möglichst hoher Permeabilität bei geringer elektrischer Leitfähigkeit in Form einer Folie oder einer dünnen Scheibe angeordnet. Dieser Einlagekörper erstreckt sich in der Projektion aber nicht nur auf den Ringbereich der Antennenspule 14, sondern radial bis zum Zentrum des Transponders 13 hinein und außerdem radial bis nach außerhalb der seitlichen Berandung des Werkes 17, also über dessen Projektion auf den Transponder 13 seitlich hinaus bis zur äußeren Peripherie der Spule 14. Die ganze Anordnung ist in das Uhrgehäuse 19 eingefaßt.

Insbesondere der das Werk 17 radial überragende Randbereich des hochpermeablen Einlagekörpers 18 bewirkt, daß die magnetischen Feldlinien des hochfrequenten Koppelfeldes vom Abfragegerät weniger in das Werk 17 hinein verlaufen, sondern vornehmlich daran vorbei und zum Zentrum der Transponder-Antennenspule 14 geführt werden, so daß diese von einem stärkeren Magnetfluß durchsetzt und dadurch die Kopplung zur Sendespule des Abfragegerätes verbessert wird. Wenn dieser Einlagekörper 18 außerdem insbesondere für die Frequenz des Koppelfeldes einen möglichst hohen elektrischen Widerstand aufweist, dann hat das eine zusätzliche vorteilhafte Abschirmwirkung der Antennenspule 14 gegenüber den elektrisch leitfähigen Teilen des Uhrwerks 17 zur Folge, was sich in einer Verbesserung der Spulengüte auswirkt. Hinsichtlich optimaler Materialkriterien und bevorzugter Materialauswahl im übrigen wird auf die Erläuterungen in obiger Beschreibungseinleitung verwiesen.

Der Einlagekörper 18' liegt nicht hinter sondern vor dem Werk 17, wenn der Transponder 13' zwischen diesem und dem Zifferblatt 12 eingelegt ist oder sogar in das Zifferblatt 12 integriert ist, wie in der Zeichnung gestrichelt berücksichtigt.

Wie eingangs erwähnt, kann die Antennenspule 14 des Transponders 13 als flache und schmale, ringförmige Luftspule ausgebildet sein, an deren Enden der Schaltkreis 15 (und unter Umständen außerdem ein diskreter Kondensator zur Abstimmung der Antennenspule 14 in Relation zur Frequenz des Koppelfeldes) angeschlossen ist. Die Transponder-Antennenspule 14 kann aber auch als gedruckte Spule in Form von Leiterbahnen-Kaschierungen auf einer Trägerplatte ausgebildet sein, auf der auch die Transponderschaltung 15 montiert und vergossen ist. Da die axiale Stärke des scheiben- oder folienförmigen Einlagekörpers 18 nur in der Größenordnung der Höhe des Schaltkreis-Vergusses zu liegen braucht und dieser wie aus der Zeichnung ersichtlich in einer Aussparung 16 am Einlagekörper 18 eintauchen kann, braucht der die elektromagnetische Funktion des Transponders 13 optimierende Einlagekörper 18 nicht einmal zu einer größeren Bauhöhe der Armbanduhr 11 zu führen.

Im Falle einer koaxialen Anordnung von Werk 17 und Spule 14 des Transponders 13 gemäß Fig.2 hat der Einlagekörper 18 zweckmäßigerweise die Form eines offenen oder einseitig geschlossenen Hohlzylinders, dessen Wandung zwischen Werk 17 und Spule 14 eingreift.

Bei einer Kleinuhr 11 mit in ihr Gehäuse 19 integriertem Transponder 13 bewirkt also erfindungsgemäß ein Einlagekörper 18 als elektromagnetische Abschirmung in einer Ebene zwischen der Transponder-Antennenspule 14 und den elektrisch leitenden Komponenten des elektromotorisch betriebenen Werkes 17 eine Verbesserung der Spulengüte und eine Umlenkung der ansonsten von elektrisch leitfähigen Konstruktionsteilen des Werkes 17 verdrängten externen elektromagnetischen Feldlinien in das Zentrum der Transponder-Ringspule 14 hinein, also eine Verbesserung der induktiven Kopplung zwischen den Antennenspulen des Abfragegerätes und des Transponders 13. Das ermöglicht es insbesondere, Transponder-Antennenspulen 14 einzusetzen, die nicht mehr außerhalb der Projektion des Uhrwerks 17 liegen müssen, so daß die Gehäuseabmessungen im wesentlichen wieder allein von den Werkabmessungen bestimmt werden, ohne dadurch eine wesentliche Einschränkung der Abfrage-Reichweite hinnehmen zu müssen; und das eröffnet insbesondere die Möglichkeit, das Zifferblatt 12 selbst als den Transponder 13 auszustatten. Der höher auftragende Vergußbereich des Transponder-Chips 15 greift zweckmäßigerweise in eine Aussparung 16 ein, die in den Einlagekörper 18 freigespart oder eingearbeitet ist. Da der platten- oder folienförmige Einlagekörper 18 selbst nicht dicker sein muß, als der Schaltungsverguß des Transponders 13 aufträgt, ist insofern überhaupt keine Verdickung des Uhrenaufbaus gegeben.

## Patentansprüche

1. Kleinuhr (11), insbesondere Armbanduhr, mit an eine ringförmige Antennenspule (14) angeschlossenem Schaltkreis (15) eines passiven Transponders (13), der zusätzlich zum Werk (17) im Uhrengehäuse (19) angeordnet ist,
**dadurch gekennzeichnet**,
daß zwischen dem Werk (17) und dem Transponder (13) ein Einlagekörper (18) aus hochpermeablem Material angeordnet ist.

2. Kleinuhr nach Anspruch 1,
**dadurch gekennzeichnet**,
daß das Material des Einlagekörpers (18) einen hohen elektrischen Widerstand insbesondere im Frequenzbereich des Transponder-Abfragefeldes aufweist.

3. Kleinuhr nach einem der vorangehenden Ansprüche,
**dadurch gekennzeichnet**,
daß der Einlagekörper (18) ein Komposit-Material aus einem Polymer-Träger mit eingelagerten Ferritkeramik-Partikeln ist.

4. Kleinuhr nach einem der vorangehenden Ansprüche,
**dadurch gekennzeichnet**,
daß der Einlagekörper (18) folien- oder scheibenförmig ausgebildet und auf einer seiner Oberfläche mit einer selbstklebenden Adhäsionsschicht ausgestattet ist.

5. Kleinuhr nach einem der vorangehenden Ansprüche,
**dadurch gekennzeichnet**,
daß die Außenkontur des Einlagekörpers (18) der Peripherie der Transponderantennenspule (14) im wesentlichen folgt.

6. Kleinuhr nach einem der vorangehenden Ansprüche,
**dadurch gekennzeichnet**,
daß der Einlagekörper (18) sich von der äußeren Peripherie der Antennenspule (14) über deren Ringbreite bis in den Ringinnenraum hinein erstreckt.

7. Kleinuhr nach einem der vorangehenden Ansprüche,
**dadurch gekennzeichnet**,
daß der Einlagekörper (14) mit einer Aussparung (16) zur Aufnahme des an die Antennenspule (14) angeschlossenen und vergossenen Transponder-Schaltkreises (15) ausgestattet ist.

8. Kleinuhr nach einem der vorangehenden Ansprüche,
**dadurch gekennzeichnet**,
daß der Einlagekörper (18) auf einem Transponder (15) angeordnet ist, der hinter dem Werk (17) im Uhrgehäuse (19) parallel zu diesem angeordnet ist.

9. Kleinuhr nach einem der Ansprüche 1 bis 7,
**dadurch gekennzeichnet**,
daß der Einlagekörper (18) auf der dem Zifferblatt (12) zugewandten Oberfläche des Werkes (17) angeordnet ist.

10. Kleinuhr nach einem der Ansprüche 1 bis 4,
**dadurch gekennzeichnet**,
daß der Einlagekörper (18) hohzylindrisch zwischen Werk (17) und diese umgebender Spule (14) angeordnet ist.
